## Europäisches Patentamt

## European Patent Office

## Office européen des brevets

(19)

(11) Veröffentlichungsnummer: **0 114 268**
**B1**

(12) **EUROPÄISCHE PATENTSCHRIFT**

(45) Veröffentlichungstag der Patentschrift:
17.11.88

(51) Int. Cl.⁴: **G 06 F 13/42**

(21) Anmeldenummer: **83112208.0**

(22) Anmeldetag: **05.12.83**

(54) Schaltkreis-Baustein.

(30) Priorität: **23.12.82 DE 3247834**

(43) Veröffentlichungstag der Anmeldung:
**01.08.84 Patentblatt 84/31**

(45) Bekanntmachung des Hinweises auf die Patenterteilung:
**17.11.88 Patentblatt 88/46**

(84) Benannte Vertragsstaaten:
**AT DE FR GB IT**

(56) Entgegenhaltungen:
**COMPUTER DESIGN, Band 21, Nr. 3, März 1982, Seiten 91-102, Concord, US; P. MADAN et al.:"LSI transceiver chips complete GPIB interface"**
**ELEKTRONIK, Heft 17, 1980, Seiten 56-60, München, DE; W. HAUPT et al.: "Zur Verlängerung des IEC-Bus: Bidirektionaler Koppler für Datenleitungen"**
**ELECTRONIC DESIGN, Band 29, Nr. 14, Juli 1981, Seiten 117-121, Denville NT, US; D. Folkes: "Remote-control processors boost efficient data comm"**
**PATENT ABSTRACTS OF JAPAN, Band 6, Nr. 221 (P-153) [1099], 5. November 1982, & JP - A - 57 125 425**

(73) Patentinhaber: **Siemens Aktiengesellschaft Berlin und München, Wittelsbacherplatz 2, D-8000 München 2 (DE)**

(72) Erfinder: **Wagner, Wolfgang, Dipl.-Ing., Wachenheimerstrasse 15, D-8000 München 90 (DE)**

**Beschreibung**

Die Erfindung bezieht sich auf einen Schaltkreis-Baustein mit Anschlusselementen zum Anschluss an einen Bus, über den Daten-, Adress-, oder Steuersignale übertragen werden.

Schaltkreis-Bausteine (Chips) werden mit Hilfe ihrer Anschlusselemente, z.B. Anschlussstifte, an einen Bus angeschlossen. In dem Bus sind Leitungen zur Datenübertragung, zur Adressübertragung und zur Übertragung von Steuersignalen zusammengefasst. An einen solchen Bus kann eine Vielzahl von weiteren Schaltkreis-Bausteinen angeordnet werden. Um ein Zusammenarbeiten dieser verschiedenen Bausteine zu ermöglichen, müssen die über den Bus zu übertragenden Signale bestimmte, vorher festgelegte Werte haben und der Bus zusammen mit den Bausteinen muss mit einem bestimmten Systemtakt betrieben werden. Die auf den Bausteinen angeordneten Schaltkreise sind dementsprechend ausgebildet, arbeiten mit dem Systemtakt und geben Signale in der vom Bus gewünschten Art ab. Soll ein solcher Baustein an einen Bus angeschlossen werden, dessen Betriebsdaten andere Werte hat als der Bus, für den der Baustein ursprünglich vorgesehen war, muss zwischen dem Baustein und dem Bus eine Anpassungsschaltung eingefügt werden. Diese sorgt dafür, dass die Zeitverhältnisse des Bausteins an die Zeitverhältnisse der übrigen am Bus angeschlossenen Bausteine angepasst werden und dass die Signalleitungen des Bausteins mit den zugeordneten Signalleitungen der übrigen Bausteine verbunden werden.

Eine derartige Anpassungsschaltung ist beispielsweise aus Computer Design, März 1982, S. 91 bis 102; P. Madan et al bekannt. Der dort beschriebene Interface-Baustein besitzt umschaltbare Schnittstellenschaltungen, die eine Anpassung der über die Anschlusselemente zu übertragenden Signale an die Betriebsdaten des Busses erlauben. Es handelt sich dabei um einen speziellen Anpassungsschaltungs-Baustein, der die Anschaltung eines Schaltkreis-Bausteins an ein artfremdes Bussystem ermöglicht.

Aus Patentabstracts of Japan, Band 6, Nr. 221, 5. November 1982, und JP-A-57 125 425 ist ebenfalls bekannt, zur Anpassung an verschiedene Busübertragungsgeschwindigkeiten in einem Datenübertragungssystem interne Taktsignale mittels eines Taktauswahlsignals umzuschalten.

Die der Erfindung zugrundeliegende Aufgabe besteht darin, einen Schaltkreis-Baustein anzugeben, der an Busse mit verschiedenen Betriebsdaten angeschlossen werden kann, ohne dass zusätzliche Anpassungsschaltungen erforderlich sind. Diese Aufgabe wird bei einem Schaltkreisbaustein der eingangs angegebenen Art durch die kennzeichnenden Merkmale des Patentanspruchs 1 gelöst.

Die Schnittstellenschaltung pro Anschlusselement des Bausteins besteht aus einem ersten Multiplexer, an dessen Eingängen von einem Taktgeber aus einem dem Bus zugeordneten Systemtakt gewonnene interne Takte anliegen, und der einen der internen Takte in Abhängigkeit von einer der gewünschten Betriebsart zugeordneten Adresse zum Ausgang durchschaltet, und aus einem Zwischenspeicher, der in der Leitung zum/ vom Anschlusselement angeordnet ist und dessen Übernehmeeingang mit dem Ausgang des Multiplexers verbunden ist. Mit einer derartigen Schnittstellenschaltung kann eine zeitliche Anpassung der Signale durchgeführt werden.

Eine Bedeutungsänderung der über die Signalleitungen zu übertragenden Signale kann auf einfache Weise dadurch erreicht werden, dass in der Leitung zum/vom Anschlusselement ein vor dem ersten Zwischenspeicher angeordneter zweiter Multiplexer vorgesehen ist, dessen Eingänge mit Leitungen für über das Anschlusselement zu übertragenden Signalen verbunden sind und der in Abhängigkeit der der Betriebsart zugeordneten Adresse einen der Eingänge zum Zwischenspeicher durchschaltet.

Da die Anzahl der Anschlusselemente pro Baustein begrenzt ist, ist es vorteilhaft, wenn die Adresse für die Betriebsart über Anschlusselemente zugeführt wird, denen auch eine andere Bedeutung zugeordnet werden kann. Dies kann dadurch erreicht werden, dass die Adresse für den Multiplexer an Anschlusselemente des Bausteins nur angelegt wird, während ein Resetsignal am Baustein anliegt.

Nach Beendigung des Resetsignals kann den Anschlusselementen eine andere Bedeutung zugeordnet werden.

Weitere Ausbildungen der Erfindung ergeben sich aus den Unteransprüchen.

Anhand von Ausführungsbeispielen, die in den Figuren dargestellt sind, wird die Erfindung weiter erläutert. Es zeigen

Fig. 1 ein Blockschaltbild eines Schaltkreis-Bausteins mit zwei Bussen,

Fig. 2 einen ersten Verlauf von Taktsignalen aufgetragen über der Zeit t,

Fig. 3 ein weiterer Verlauf von Taktsignalen aufgetragen über der Zeit t,

Fig. 4 eine erste Ausführung einer Schnittstellenschaltung,

Fig. 5 eine zweite Ausführung einer Schnittstellenschaltung.

Auf einem Baustein CH sind in bekannter Weise Schaltkreise integriert. Z.B. kann auf den Baustein CH eine DMA-Steuerung angeordnet sein. Um den Schaltkreisen auf dem Baustein CH Signale, z.B. Adresssignale, Datensignale und Steuersignale, zuführen zu können, sind die Schaltkreise auf dem Baustein CH über Anschlusselemente $Pi(i = 1, 2$ usw.) mit einem Bus BU verbunden. In einem solchen Bus BU sind z.B. Adressleitungen, Datenleitungen und Steuersignalleitungen zusammengefasst. An einen solchen Bus BU sind noch weitere Bausteine angeschlossen, die einen verschiedenen Aufbau haben können. Um das Zusammenwirken dieser Bausteine zu ermöglichen, müssen einander zugeordnete Leitungen der Bausteine über den Bus miteinander verbunden werden und der zeitliche Ablauf der Übertragung der Signale muss aufeinander abgestimmt sein. Dementsprechend sind jedem Bus Betriebsdaten zugeordnet, die von den an den Bus angeschlossenen Bausteinen eingehalten werden müssen, um die Zusammenarbeit zwischen den Bausteinen zu ermöglichen.

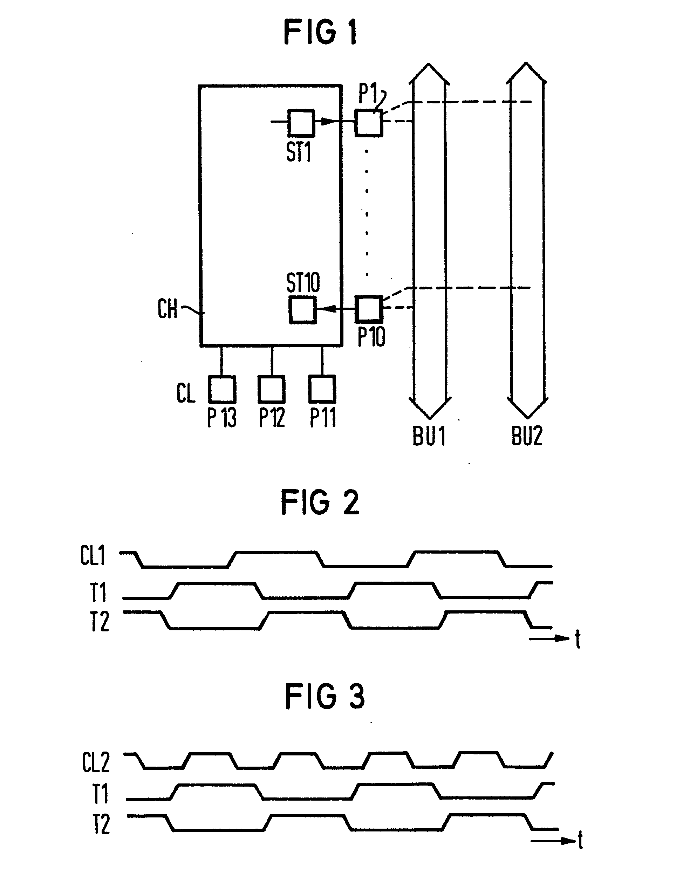

Wenn ein Baustein CH an Busse mit verschiedenen Betriebsdaten angeschlossen werden soll, z.B. an den Bus BU 1 und an den Bus BU 2, dann sind zusätzliche Massnahmen erforderlich, um die von Schaltkreisen auf dem Baustein CH erzeugten Signale in zeitlicher Hinsicht und in Bedeutung an die Betriebsdaten des Busses anzupassen. Dazu sind nach Fig. 1 auf dem Baustein CH in den Signalleitungen, die zu den Bussen führen, Schnittstellenschaltungen ST angeordnet. Diese Schnittstellenschaltungen ST passen die über die Signalleitungen und die Anschlusselemente P zu übertragenden Signale in zeitlicher Hinsicht an Busse BU an und sorgen auch dafür, dass das richtige Signal der richtigen Busleitung zugeführt wird.

Aus Fig. 2 und Fig. 3 ergeben sich zwei verschiedene Zeitdiagramme, in denen in der ersten Zeile die Systemtakte CL1 bzw. CL2 der Busse BU1 bzw. BU2 dargestellt sind. In den Beispielen der Fig. 2 und Fig. 3 hat der Takt CL1 die halbe Frequenz des Taktes CL2. Aus diesen Systemtakten CL1 und CL2, die an den Baustein CH angelegt werden, müssen interne Takte für die auf dem Baustein CH angeordneten Schaltkreise entwickelt werden, z.B. die internen Takte T1 und T2. Diese stimmen in Fig. 2 und Fig. 3 in der Frequenz überein.

Da nun, wie die Figuren 2 und 3 zeigen, die Systemtakte CL von den internen Takten T abweichen können, ist ein Zusammenwirken des Bausteins CH mit den Bussen BU nur dann möglich, wenn die zu übertragenden Signale, die vom Baustein CH kommen, auf den Systemtakt einsynchronisiert werden bzw. die von den Bussen BU kommenden Signale auf die internen Takte einsynchronisiert werden. Dies übernehmen die Schnittstellenschaltungen ST.

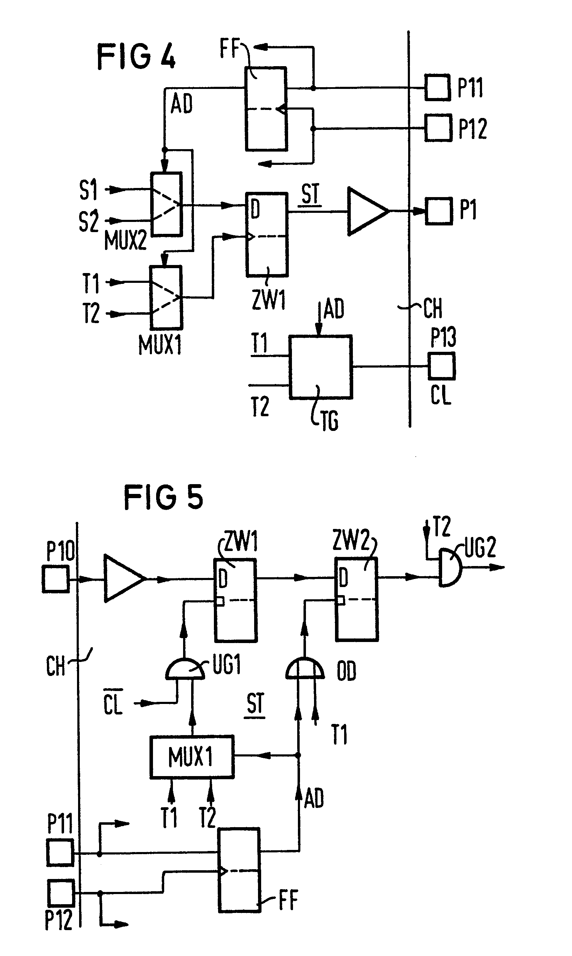

Aus Fig. 4 ergibt sich eine erste Ausführungsform einer solchen Schnittstellenschaltung ST. Diese Schnittstellenschaltung kann bevorzugt dazu verwendet werden, von den Schaltkreisen auf dem Baustein CH abgegebene Signale an die Betriebsdaten der Busse anzupassen. Dabei wird im Ausführungsbeispiel davon ausgegangen, dass an den Baustein CH nur zwei Busse BU1 und BU2 angeschlossen werden sollen.

Die Schnittstellenschaltung enthält einen ersten Multiplexer MUX1 und einen Zwischenspeicher ZW1, z.B. ein D-Flipflop. Den Eingängen des ersten Multiplexers MUX1 werden die internen Taktsignale T1 und T2 zugeführt. In Abhängigkeit einer den Bussen B1 bzw. BU2 zugeordneten Adresse AD schaltet der erste Multiplexer MUX1 entweder den internen Takt T1 bzw. den internen Takt T2 an den Übernahmeeingang des ersten Zwischenspeichers ZW1, also an den Steuereingang des D-Flipflop. Durch die Flanken der internen Takte T1 bzw. T2 kann somit der Zeitpunkt festgelegt werden, zu dem die am Zwischenspeicher ZW1 anliegende Information in den Zwischenspeicher übernommen wird und damit am Anschlusselement P1 anliegt. Zwischen dem Zwischenspeicher ZW1 und dem Anschlusselement P1 ist ein üblicherweise aufgebauter Verstärker angeordnet.

Die Schnittstellenschaltung der Fig. 4 kann mit Hilfe eines zweiten Multiplexers MUX2 erweitert werden. Dieser Multiplexer MUX2 ist in der Signalleitung zum D-Eingang des Zwischenspeichers ZW1 eingefügt. In Abhängigkeit der am Multiplexer MUX2 anliegenden Adresse AD kann entweder ein Signalzug S1 oder ein Signalzug S2 an den Zwischenspeicher ZW1 angelegt werden. Die zeitliche Einsynchronisierung erfolgt wiederum mit Hilfe des ersten Multiplexers MUX1.

Die internen Takte T1 und T2 werden aus dem Betriebstakt CL, der z.B. am Anschlusselement P13 anliegt, in einem Taktgenerator TG gewonnen. Diesem Taktgenerator TG wird ebenfalls die Adresse AD zugeführt. Der Taktgenerator TG ist in bekannter Weise aufgebaut und gibt im Falle der Fig. 2 in zeitlicher Verzögerung den Betriebtakt bzw. den Betriebstakt invertiert ab, im Falle der Fig. 3 teilt der Taktgenerator den Betriebstakt CL2 durch 2 und gibt dann entsprechend Fig. 2 die Takte T1 und T2 ab.

Die Adresse AD wird an eines der Anschlusselemente angelegt, z.B. an das Anschlusselement P11. Da die Multiplexer MUX nur zwischen zwei Eingangsleitungen schalten müssen, genügt zur Zufuhr der Adresse AD ein Anschlusselement P11. Das Anschlusselement P11 kann für zusätzliche Aufgaben verwendet werden, wenn die Adresse AD nur zeitlich begrenzt an das Anschlusselement P11 angelegt werden muss. Der Zeitraum, in dem dies geschieht, dann durch ein Signal am Anschlusselement P12 festgelegt werden. Z.B. genügt es, wenn die Adresse AD am Anschlusselement P11 während der Zeit anliegt, in der am Anschlusselement P12 ein Resetsignal für den Baustein anliegt. Nach Verschwinden des Resetsignals am Anschlusselement P12 kann dann das Anschlusselement P11 für andere Zwecke verwendet werden, z.B. zur Übertragung eines Adressbits.

Die Adresse AD kann dann in einem Flipflop FF zwischengespeichert werden.

Aus Fig. 5 ergibt sich eine weitere Ausführungsform der Schnittstellenschaltung, die bevorzugt verwendet wird, um Signale, die von einem Bus kommen, an die internen Zeitverhältnisse anzupassen. Die Sczhnittstellenschaltung nach Fig. 5 ist teilweise identisch mit der der Fig. 4. Es ist wiederum ein erster Multiplexer MUX1 vorgesehen, an dessen Eingängen die internen Taktsignale T1 und T2 anliegen und die in Abhängigkeit einer Adresse AD den Zeitpunkt der Einspeicherung des zu übertragenden Signales festlegen. Dieser Zeitpunkt kann weiterhin dadurch festgelegt werden, dass zwischen dem ersten Multiplexer MUX1 und dem Übernahmeeingang des Zwischenspeichers ZW1 ein UND-Glied angeordnet ist, dem zusätzlich der Systemtakt CL zugeführt wird. Damit kann der Übernahmezeitpunkt des Signales in den Zwischenspeicher ZW1 auch noch vom Systemtakt CL abhängig gemacht werden.

Soll das Signal mit dem Takt T2 in den Zwischenspeicher ZW1 übernommen werden, sogleich aber mit dem Takt T1 über die Leitung zu einem Schaltkreis im Baustein CH weitergeleitet werden, dann ist es zweckmässig, am Ausgang des Zwischenspeichers ZW1 einen weiteren Zwischenspeicher ZW2, z.B. ein D-Flipflop, anzuordnen. An den Übernahmeeingang des zweiten Zwischenspeichers ZW2 wird dann der Takt T1 angelegt. Am Ausgang des zweiten Zwischenspeichers ZW2 kann ein UND-Glied UG2 angeordnet werden, dem zusätzlich der interne Takt T2 zugeführt wird. Durch die Zwischenspeicherung des zu übertragenden Signales im Zwischenspeicher ZW2 wird die Übernahme eines Signales in den Zwischenspeicher ZW1 und die Weiterleitung eines Signales entkoppelt.

Soll dagegen die Einspeicherung des Signals in den Zwischenspeicher ZW1 mit Takt T1 erfolgen, die Weiterleitung dagegen mit dem Takt T2, dann ist der Zwischenspeicher ZW2 unnötig und wird auf Durchgang geschaltet. Dies wird mit Hilfe eines ODER-Gliedes OD erreicht, die die Leitung für die Adresse AD und die Leitung für den internen Takt T1 zusammenfasst und an den Übernahmeeingang des Zwischenspeichers ZW2 anlegt. Die Gewinnung der Adresse AD und der internen Takte T1 und T2 entspricht Fig. 4.

Werden über ein Anschlusselement P Signale in beiden Richtungen übertragen, dann sind zwei entsprechende Schnittstellenschaltungen gemäss Fig. 4 oder Fig. 5 erforderlich.

In den Ausführungsbeispielen der Fig. 4 und Fig. 5 erfolgt eine zeitliche Anpassung mit Hilfe zweier Taktsignale T1 und T2. Selbstverständlich ist es auch möglich, mehr als zwei Taktsignale zum Einsynchronisieren zu verwenden. Entsprechend muss dann die Anzahl der Eingänge des Multiplexers MUX1 erhöht werden und die Adresse AD besteht nicht nur aus einem Bit sondern aus mehreren Bit. Der Multiplexer MUX2 kann ebenfalls mehrere Eingänge zum D-Eingang des Zwischenspeichers ZW1 durchschalten.

**Patentansprüche**

1. Schaltkreis-Baustein (CH) mit Anschlusselementen (P) zum Anschluss an einen Bus, über den Daten-, Adress- oder Steuersignale übertragen werden, wobei auf dem Baustein vor den Anschlusselementen umschaltbare Schnittstellenschaltungen (ST) angeordnet sind, die eine Anpassung der über die Anschlusselemente zu übertragenden Signale an die Betriebsdaten des Busses durchführen, dadurch gekennzeichnet, dass jede Schnittstellenschaltung (ST) einen ersten Multiplexer (MUX1) enthält, an dessen Eingängen von einem Taktgeber (TG) aus einem dem Bus (BU) zugeordneten Systemtakt (CL) gewonnene interne Takte (T1, T2) anliegen, und der einen der internen Takte in Abhängigkeit von einer der gewünschten Betriebsart zugeordneten Adresse (AD) zu seinem Ausgang durchschaltet und dass jede Schnittstellenschaltung (ST) in der Signalleitung zwischen einem Anschlusselement (P) und einem Schaltkreis des Bausteins (CH) einen ersten Zwischenspeicher (ZW1) enthält, dessen Übernahmeeingang mit dem Ausgang des ersten Multiplexers (MUX1) verbunden ist.

2. Schaltkreis-Baustein nach Anspruch 1, dadurch gekennzeichnet, dass in der Signalleitung zwischen einem Anschlusselement (P) und einem Schaltkreis des Bausteins (CH) vor dem Dateneingang des ersten Zwischenspeichers (ZW1) ein zweiter Multiplexer (MUX2) angeordnet ist, dessen Eingänge mit Leitungen für über das Anschlusselement (P) zu übertragenden Signale verbunden sind und der in Abhängigkeit der der Betriebsart zugeordneten Adresse (AD) einen der Eingänge zum ersten Zwischenspeicher (ZW1) durchschaltet.

3. Schaltkreis-Baustein nach Anspruch 1 oder 2, dadurch gekennzeichnet, dass hinter dem ersten Zwischenspeicher (ZW1) ein zweiter Zwischenspeicher (ZW2) angeordnet ist, an dessen Übernahmeeingang ein auf den dem ersten Zwischenspeicher zugeführten Takt (T2) folgender Takt (T1) anliegt.

4. Schaltkreis-Baustein nach Anspruch 3, dadurch gekennzeichnet, dass zwischen dem Ausgang des ersten Multiplexers (MUX1) und dem Übernahmeeingang des ersten Zwischenspeichers (ZW1) ein UND-Glied (UG1) angeordnet ist, an dessen zweitem Eingang der Systemtakt (CL) anliegt.

5. Schaltkreis-Baustein nach einem der Ansprüche 1 bis 4, dadurch gekennzeichnet, dass die Adresse (AD) für die Multiplexer (MUX1, MUX2) an Anschlusselemente (P11) des Bausteines (CH) angelegt sind, während ein Resetsignal an einem Anschlusselement (P12) am Baustein anliegt, und dass nach Beendigung des Resetsignals den Anschlusselementen eine andere Bedeutung zugeordnet ist.

**Claims**

1. A circuit module (CH) comprising terminal elements (P) for connection to a bus via which data, address, or control signals are transmitted, where switch-over interface circuits (ST), which match the signals to be transmitted via the terminal elements to the operating data of the bus, are arranged on the module prior to the terminal elements, characterised in that each interface circuit (ST) comprises a first multiplexer (MUX1) whose inputs are supplied with internal clock signals (T1, T2) obtained by a clock generator (TG) from a system clock signal (CL) assigned to the bus (BU), and which switches one of the internal clock signals to its output in dependence upon an address (AD) assigned to the desired operating mode, and that each interface circuit (ST) comprises, in the signal line between a terminal element (P) and a circuit of the module (CH), a first intermediate store (ZW1) whose transfer input is connected to the output of the first multiplexer (MUX1).

2. A circuit module as claimed in Claim 1, characterised in that, in the signal line between a terminal (P) and a circuit of the module (CH) in front of the data input of the first intermediate store (ZW1), there ist arranged a second multiplexer (MUX2) whose inputs are connected to lines for signals which are to be transmitted via the terminal element (P) and which switches through one of the inputs to the first intermediate store (ZW1) in dependence upon the address (AD) assigned to the operating mode.

3. A circuit module as claimed in Claim 1 or 2, characterised in that behind the first intermediate store (ZW1) there is arranged a second intermediate store (ZW2) whose transfer input is supplied with a clock signal (T1) which follows the clock signal (T2) which is supplied to the first intermediate store.

4. A circuit module as claimed in Claim 3, characterised in that, between the output of the first multiplexer (MUX1) and the transfer input of the first intermediate store (ZW1), there ist arranged an AND-gate (UG1) whose second input is supplied with the system clock signal (CL).

5. A circuit module as claimed in one of Claims 1 to 4, characterised in that the address (AD) for the multiplexers (MUX1, MUX2) is supplied to terminal elements (P11) of the module (CH) whilst a reset signal occurs across a terminal element (P12) of the module and that, at the end of the reset signal, the terminal elements are assigned a different significance.

**Revendications**

1. Module à circuits (CH) comportant des organes de raccordement (P) servant à réaliser le raccordement à un bus, par l'intermédiaire duquel des signaux de données, des signaux d'adresses ou des signaux de commande sont transmis, et sur lequel sont disposés, en amont des organes de raccordement, des circuits d'interface commutables (ST), qui réalisent une adaptation des signaux, qui doivent être transmis par l'intermédiaire des organes de raccordement, aux données de service du bus, caractérisé par le fiat que chaque circuit d'interface (SC) contient un premier multiplexeur (MUX1), aux entrées duquel sont appliquées des cadences internes (T1, T2) délivrées par un générateur de cadence (PG) à partir d'une cadence système (CL), associée au bus (BU), et qui transmet directement l'une des cadences internes à sa sortie en fonction d'une adresse (AD) associée à l'état de fonctionnement désiré, et que chaque circuit d'interface (ST) contient, dans la ligne de transmission de signaux entre un organe de raccordement (P) et un circuit du module (CH), une première mémoire intermédiaire (ZW1), dont l'entrée de réception est raccordée à la sortie du premier multiplexeur (MUX1).

2. Module à circuits suivant la revendication 1, caractérisé par le fait que dans la ligne de transmission de signaux entre un organe de raccordement (P) et un circuit du module (CH) se trouve disposé, en amont de l'entrée des données de la première mémoire intermédiaire (ZW1), un second multiplexeur (MUX2), dont les entrées sont reliées à des lignes prévues pour des signaux devant être transmis par l'intermédiaire de l'organe de raccordement (P) et qui raccorde directement l'une des entrées à la première mémoire intermédiaire (ZW1) en fonction de l'adresse (AD) associée au type de fonctionnement.

3. Module à circuits suivant la revendication 1 ou 2, caractérisé par le fait qu'en aval de la première mémoire intermédiaire (ZW1) se trouve disposée une seconde mémoire intermédiaire (ZW2), à l'entrée de réception de laquelle est appliquée une cadence (T1) qui succède à la cadence (T2) envoyée à la première mémoire intermédiaire.

4. Module à circuits suivant la revendication 3, caractérisé par le fait qu'entre la sortie du premier multiplexeur (MUX1) et l'entrée de réception de la première mémoire intermédiaire (ZW1) se trouve disposé un circuit ET (UG1), à la seconde entrée duquel est appliquée la cadence (CL) du système.

5. Module à circuits suivant l'une des revendications 1 à 4, caractérisé par le fait que les adresses (AD) pour les multiplexeurs (MUX1, MUX2) sont appliquées à des organes de raccordement (P11) du module (CH) tandis qu'un signal de remise à l'état initial est appliqué à un organe de raccordement (P12) monté sur le module, et qu'à la fin du signal de remise à l'état initial, une autre signification est affectée aux organes de raccordement.

## FIG 1

## FIG 2

## FIG 3

FIG 4

FIG 5